# EUROPEAN PATENT APPLICATION

(11) **EP 4 563 834 A1**
(43) Date of publication of application: **04.06.2025**
(21) Application number: 23846569.4
(22) Date of filing: 26.07.2023
(51) Int. Cl.: F16C 17/04, F16J 15/34

(54) **SLIDING COMPONENT**

(30) Priority: 29.07.2022 JP 2022122134
(71) Applicant: Eagle Industry Co., Ltd., Minato-ku Tokyo 105-8587 (JP)
(72) Inventor: FUKUDA, Shogo, Tokyo 105-8587 (JP)
(74) Representative: WSL Patentanwälte Partnerschaft mbB
(86) International application number: PCT/JP2023/027394
(87) International publication number: WO 2024/024839

(57) **Abstract**

There are provided sliding components having smooth torque behavior. In sliding components 10 and 20 of which a pair of sliding surfaces 11 and 21 rotate relative to each other, a dynamic pressure groove 13 being formed on at least one of the sliding surfaces 11 and 21, and which partition a sealed fluid space S1 and a leakage space S2 off from each other, a microgroove 14 shallower than the dynamic pressure groove 13 and extending in a circumferential direction is disposed on at least one of sliding surfaces 11 and 21, and the microgroove 14 extends to cross a tip region 13a on a tip 13B side of half W12 a radial width dimension W1 of the dynamic pressure groove 13.

## Description

### {TECHNICAL FIELD}

The present invention relates to sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal as a shaft sealing device that prevents a leakage of a sealed fluid includes a pair of sliding components having an annular shape which rotate relative to each other and of which sliding surfaces slide on each other. In such a mechanical seal, in recent years, there has been a desire to reduce the loss of energy due to sliding for environmental measures and the like.

For example, in a mechanical seal disclosed in Patent Citation 1, a stationary seal ring is provided with dynamic pressure grooves. The dynamic pressure grooves extend in an arc shape from a radially outer side that is a sealed fluid space side toward a radially inner side that is a leakage space side, and closed end portions on the radially inner side thereof are tapered.

Accordingly, as a rotating seal ring rotates relative to the stationary seal ring, a sealed fluid that has flowed into the dynamic pressure grooves from the sealed fluid space side flows out from tips on the radially inner side of the dynamic pressure grooves into a gap between sliding surfaces. The sliding surfaces are separated from each other by dynamic pressure generated at this time, and the sealed fluid is introduced into the gap between the sliding surfaces, so that lubricity is improved. In such a manner, the loss of energy due to sliding can be reduced.

### {CITATION LIST}

### {Patent Literature}

Patent Citation 1: JP 3079562 B2 (Page 4, FIG. 2)

### {SUMMARY OF INVENTION}

### {Technical Problem}

In such sliding components of Patent Citation 1, the leakage of the sealed fluid to the leakage space side is suppressed by a fluid on the leakage space side flowing into the gap between the sliding surfaces as the sliding surfaces are separated from each other by the dynamic pressure.

In more detail, the sealed fluid that has flowed out from the dynamic pressure grooves into the gap between the sliding surfaces has a high pressure, and can hinder the leakage of the fluid on the leakage space side to the sealed fluid space. In addition, the sealed fluid of which the pressure has decreased as the sealed fluid moves away from the dynamic pressure grooves is pushed back to the sealed fluid space side by the fluid on the leakage space side. In addition, the position where the pressure is high according to the relative rotation continues to transition as the tip regions of the dynamic pressure grooves move. In such a manner, the fluid pressure generated by the dynamic pressure grooves is unbalanced, and an interface between the sealed fluid and the fluid on the leakage space side continues to fluctuate irregularly, which becomes a factor that disturbs torque behavior.

The present invention has been made in view of such problems, and an object of the present invention is to provide sliding components having smooth torque behavior.

### {Solution to Problem}

In order to solve the foregoing problems, sliding components according to the present invention are sliding components of which a pair of sliding surfaces rotate relative to each other, a dynamic pressure groove being formed on at least one of the sliding surfaces, and which partition a sealed fluid space and a leakage space off from each other. A microgroove shallower than the dynamic pressure groove and extending in a circumferential direction is disposed on at least one of the sliding surfaces, and the microgroove extends to cross a tip region on a tip side of half a radial width dimension of the dynamic pressure groove. According to the aforesaid feature of the present invention, a fluid that has flowed out from the dynamic pressure groove into a gap between the sliding surfaces is homogenized by the microgroove. For this reason, the microgroove can suppress the generation of unbalanced fluid pressure due to the dynamic pressure groove. In addition, the microgroove shallower than the dynamic pressure groove has a small influence on the fluid in the dynamic pressure groove. For this reason, the sliding components capable of efficiently generating dynamic pressure in the dynamic pressure groove easily form a fluid film between the sliding surfaces. Further, the microgroove that crosses the tip region of the dynamic pressure groove can effectively homogenize the fluid in the tip region where pressure fluctuations are severe. Accordingly, an interface between the sealed fluid and a fluid on a leakage space side is easily stabilized between the sliding surfaces, so that the sliding components can smooth torque behavior.

It may be preferable that a plurality of the microgrooves are disposed to be separated from each other in a radial direction. According to this preferable configuration, the sliding components are allowed to more effectively homogenize fluid pressure by providing the plurality of microgrooves.

It may be preferable that a radial width dimension of the microgroove is shorter than the radial width dimension of the dynamic pressure groove. According to this preferable configuration, the microgroove having a shorter radial width dimension than the dynamic pressure groove is less likely to hinder a dynamic pressure effect occurring in the dynamic pressure groove, and can stabilize the interface while preventing uneven contact between the sliding surfaces.

It may be preferable that the microgroove communicates with the dynamic pressure groove. According to this preferable configuration, the microgroove communicating with the tip region of the dynamic pressure groove can more effectively homogenize the fluid in the tip region where pressure fluctuations are severe.

It may be preferable that the plurality of microgrooves are concentric arc-shaped grooves. According to this preferable configuration, since the microgrooves are concentrically disposed, the position of the interface between the sliding surfaces has no variation in radial position corresponding to the relative rotation speed, namely, the interface occurs along the microgrooves, and torque behavior can be further stabilized.

It may be preferable that other microgrooves are further provided in a region separated from the dynamic pressure groove in the radial direction. According to this preferable configuration, since the microgroove exists even in the region where no dynamic pressure groove is provided, fluctuating pressure can be effectively suppressed.

It may be preferable that the plurality of microgrooves are provided in the radial direction from a first radially end portion to a second radially end portion of the dynamic pressure groove. According to this preferable configuration, since the microgrooves exist across the region where the dynamic pressure groove is provided, fluctuating pressure can be effectively suppressed.

It may be preferable that the dynamic pressure groove may include a negative pressure groove that generates a negative pressure and a positive pressure groove that generates a positive pressure. According to this preferable configuration, fluctuating pressure in the dynamic pressure groove which generates a negative pressure and in which pressure fluctuations occur more noticeably can be effectively homogenized.

### {BRIEF DESCRIPTION OF DRAWINGS}

FIG. 1 is a longitudinal sectional view illustrating one example of a mechanical seal as sliding components according to a first embodiment of the present invention.
FIG. 2 is a view of a sliding surface of a stationary seal ring in the first embodiment when viewed in an axial direction.
FIG. 3 is a partially enlarged view of FIG. 2.
FIG. 4 is a cross-sectional view taken along line A-A in FIG. 3.
FIG. 5 is an enlarged view of a sliding surface of a stationary seal ring which is one of sliding components according to a second embodiment of the present invention when viewed in the axial direction.
FIG. 6 is a view of a sliding surface of a stationary seal ring which is one of sliding components according to a third embodiment of the present invention when viewed in the axial direction.
FIG. 7 is a partially enlarged view of FIG. 6.
FIG. 8 is a view of a sliding surface of a stationary seal ring which is one of sliding components according to a fourth embodiment of the present invention when viewed in the axial direction.
FIG. 9 is an enlarged view of a sliding surface of a stationary seal ring which is one of sliding components according to a fifth embodiment according to the present invention when viewed in the axial direction.
FIG. 10 is a view of a sliding surface of a stationary seal ring which is one of sliding components according to a sixth embodiment of the present invention when viewed in the axial direction.
FIG. 11 is a view of a sliding surface of a stationary seal ring which is one of sliding components according to a seventh embodiment of the present invention when viewed in the axial direction.
FIG. 12 is an enlarged view of a sliding surface of a stationary seal ring which is one of sliding components according to an eighth embodiment of the present invention when viewed in the axial direction.

### {DESCRIPTION OF EMBODIMENTS}

Modes for implementing sliding components according to the present invention will be described below based on embodiments.

### {First embodiment}

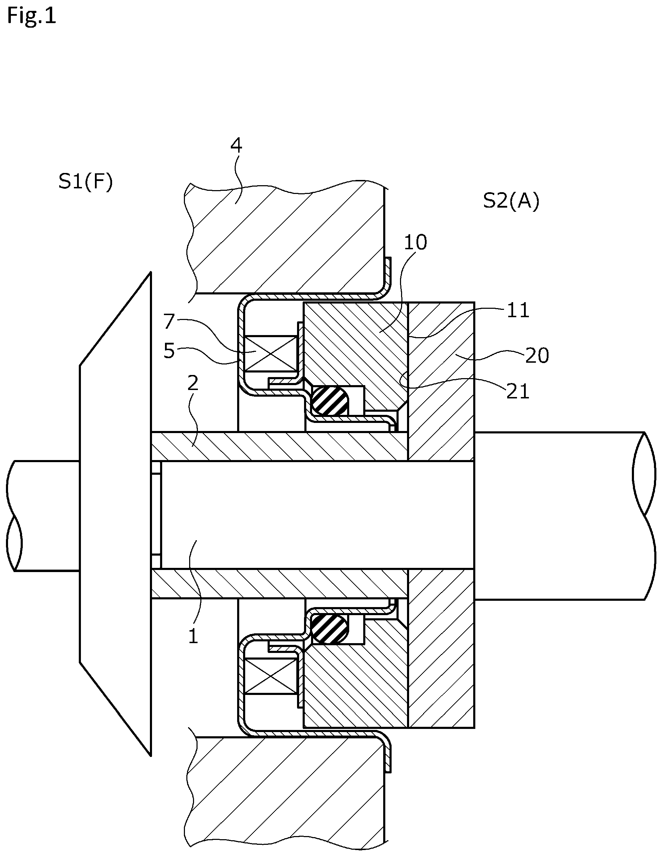

Sliding components according to a first embodiment of the present invention will be described with reference to FIGS. 1 to 4. Incidentally, in the present embodiment, a mode in which the sliding components are applied to a mechanical seal will be described as an example.

In addition, a description will be made based on the assumption that a sealed fluid F as a first fluid exists in an inner space S1 of the mechanical seal, atmosphere A as a second fluid exists in an outer space S2, a radially inner side of sliding components constituting the mechanical seal is a sealed fluid space side (high-pressure side), and a radially outer side is a leakage space side (low-pressure side). In addition, for convenience of description, in the drawings, dots may be added to grooves and the like formed on a sliding surface.

A mechanical seal for an automobile illustrated in FIG. 1 is an outside mechanical seal that seals the sealed fluid F attempting to leak from the radially inner side toward the radially outer side of sliding surfaces, and that allows the outer space S2 to communicate with the atmosphere A. Incidentally, in the present embodiment, a mode in which the sealed fluid F is a high-pressure liquid and the atmosphere A is a gas with a lower pressure than the sealed fluid F will be provided as an example.

The mechanical seal mainly includes a stationary seal ring 10 as a sliding component having annular shape and a rotating seal ring 20 as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

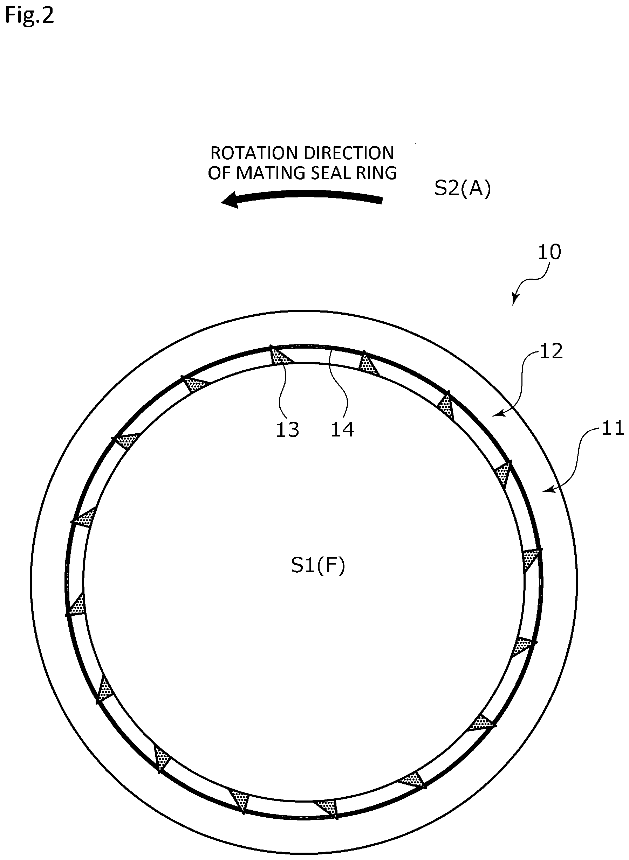

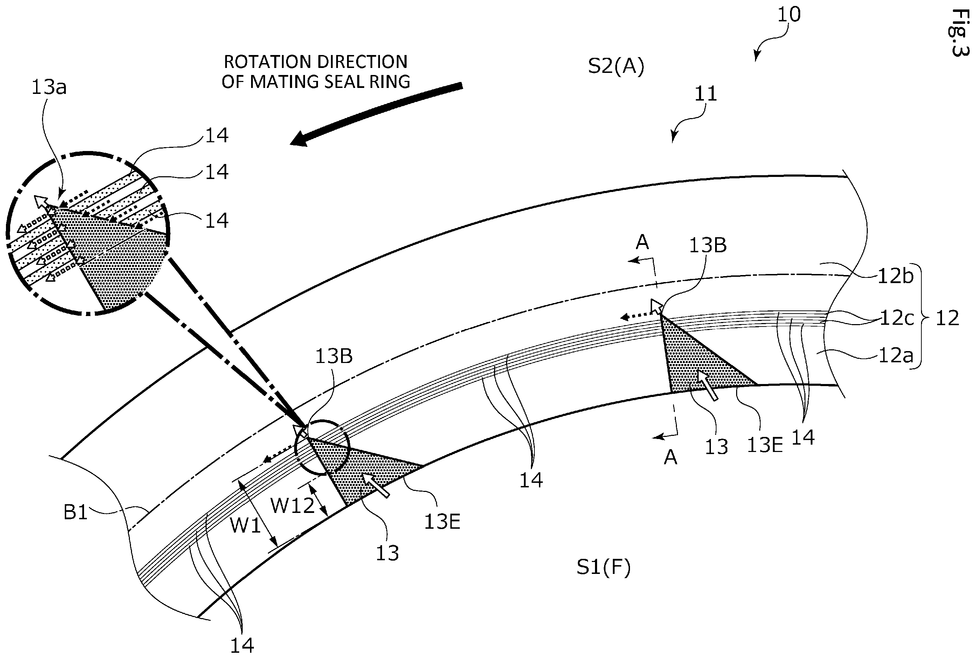

As illustrated in FIGS. 2 and 3, the rotating seal ring 20 that is a mating seal ring slides counterclockwise relative to the stationary seal ring 10 as indicated by a solid arrow.

A plurality of (16 in the present embodiment) dynamic pressure grooves 13 are evenly disposed in a circumferential direction on the radially inner side of the sliding surface 11 of the stationary seal ring 10, and a plurality of (three rows in a radial direction in the present embodiment) microgrooves 14 are disposed between adjacent dynamic pressure grooves 13 (16 in the circumferential direction in the present embodiment) to cross a tip region 13a (refer to the inside of a speech balloon in FIG. 3) that is a region on a tip side of half a radial width dimension W1 of the dynamic pressure grooves 13.

In addition, a portion of the sliding surface 11 other than the dynamic pressure grooves 13 and the microgrooves 14 is a land 12 forming a flat surface.

In detail, as illustrated in FIG. 3, the land 12 includes a land 12a between the dynamic pressure grooves 13 adjacent to each other in the circumferential direction; a land 12b extending continuously in the circumferential direction in an endless annular shape; and a land 12c between the microgrooves 14 adjacent to each other in the radial direction. In addition, the land 12b is located on the radially outer side of the dynamic pressure grooves 13, the land 12a, and the land 12c. Upper surfaces (namely, axial end surfaces) of the lands 12a, 12b, and 12c are disposed on the same plane to form the flat surface of the land 12.

As illustrated in FIG. 3, each of the dynamic pressure grooves 13 is formed in a triangular shape that is inclined in a rotation direction of the rotating seal ring 20 from an opening end portion 13E, which is one radial end portion communicating with the inner space S1, toward the radially outer side. The dynamic pressure groove 13 is a positive pressure groove in which positive pressure is generated at a tip 13B on the radially outer side which is the other radial end portion and in the tip region 13a in the vicinity thereof when the rotating seal ring 20 rotates. Incidentally, the tip region 13a is a region on a tip 13B side of a half W12 of the radial width dimension W1 of the dynamic pressure groove 13, and a portion on the radially outer side of a position indicated by an alternate long and short dashed line inside the speech balloon in FIG. 3 is included in this region. In addition, one radial end portion may be the tip 13B, and the other radial end portion may be the opening end portion 13E.

Three microgrooves 14 formed between a set of adjacent dynamic pressure grooves 13 are curved grooves extending continuously along the circumferential direction, and are disposed substantially parallel to each other and in a row. Incidentally, in the following description, the three microgrooves 14 formed between a set of adjacent dynamic pressure grooves 13 may be simply referred to as "three microgrooves 14".

In addition, the three microgrooves 14 are concentrically disposed. Further, circumferential ends of the three microgrooves 14 communicate with the dynamic pressure grooves 13 adjacent thereto in the circumferential direction. In more detail, the three microgrooves 14 communicate only with the tip regions 13a of the dynamic pressure grooves 13. Incidentally, the three microgrooves 14 can also be referred to as one microgroove group.

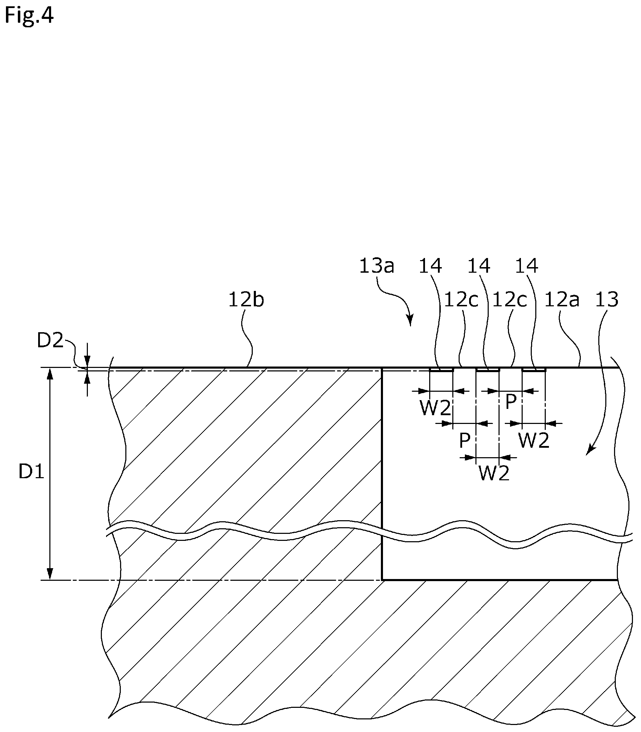

As illustrated in FIG. 4, the microgrooves 14 have substantially the same radial width dimension W2, namely, the same radial dimension. In addition, a pitch P of the microgrooves 14, namely, a radial dimension between adjacent microgrooves 14 is substantially the same as the radial width dimension W2 of the microgrooves 14 (W2 = P). In addition, the radial width dimension W2 of the microgrooves 14 is shorter than the radial width dimension W1 of the dynamic pressure grooves 13 (W1 > W2). Incidentally, the radial width dimension W2 of the microgrooves 14 is preferably 1000 **µ**m or less, and more preferably 50 to 200 **µ**m.

In addition, a depth dimension D1 of the dynamic pressure grooves 13 is sufficiently longer than a depth dimension D2 of the microgrooves 14. In more detail, the depth dimension D1 is approximately 5 to 50 times the depth dimension D2 (D1 ≈ D2 × 5 to 50). In addition, the depth dimension D1 is longer than the radial width dimension W2 of the microgrooves 14 (D1 > W2). Further, the depth dimension D2 is shorter than the radial width dimension W2 (D2 < W2).

Next, the operation of the stationary seal ring 10 and the rotating seal ring 20 during relative rotation will be described using FIG. 3.

When the rotating seal ring 20 rotates, as indicated by white arrows in FIG. 3, the sealed fluid F in the dynamic pressure groove 13 follows and moves in the rotation direction of the rotating seal ring 20 due to shear with the sliding surface 21, and the sealed fluid F in the inner space S1 is drawn into the dynamic pressure groove 13. Accordingly, positive pressure is generated in the tip region 13a of the dynamic pressure groove 13, and the sealed fluid F flows out from the tip region 13a into a gap between the sliding surfaces 11 and 21. For this reason, lubricity between the sliding surfaces 11 and 21 can be improved.

In addition, the sealed fluid F that has flowed out from the tip region 13a into the gap between the sliding surfaces 11 and 21 is guided into the microgrooves 14 located on a downstream side in the relative rotation direction, as indicated by dashed arrows in FIG. 3, and is homogenized. For this reason, the microgrooves 14 can suppress the generation of unbalanced fluid pressure due to the dynamic pressure grooves 13, mainly due to the dynamic pressure grooves 13 existing in a dotted pattern in the circumferential direction.

In addition, the microgrooves 14 shallower than the dynamic pressure grooves 13 have a small influence on the sealed fluid F in the dynamic pressure grooves 13. For this reason, the dynamic pressure grooves 13 can efficiently generate dynamic pressure. In addition, the stationary seal ring 10 easily forms a fluid film between the sliding surfaces 11 and 21.

In addition, in addition to the fact that the fluid pressure of the sealed fluid F is higher than the atmospheric pressure, severe pressure fluctuations are likely to occur in the tip region 13a where the pressure of the sealed fluid F is increased. The microgrooves 14 extend to cross the tip region 13a. For this reason, the microgrooves 14 can effectively homogenize the fluid in the tip region 13a where pressure fluctuations are severe.

Accordingly, an interface B1 between the sealed fluid F and the atmosphere A which is indicated by an alternate long and short dashed line in FIG. 3 can be easily stabilized between the sliding surfaces 11 and 21, so that the stationary seal ring 10 can smooth torque behavior. Incidentally, the interface B1 is an imaginary line illustrated for convenience of description, and the radial position and the shape of the interface B1 when viewed in the axial direction change depending on the relative rotation speed and the like. This matter also applies to other embodiments.

Particularly, the sealed fluid F locally directed in the radial direction from the tip region 13a crosses the microgrooves 14, in detail, extension locations of the microgrooves 14. During the crossing, some of the sealed fluid F is guided by the microgrooves 14.

Further, in the present embodiment, the three microgrooves 14 are provided. Accordingly, the amount and pressure of the sealed fluid F moving toward an outer space S2 side continue to be reduced and homogenized each time the sealed fluid F crosses the microgroove 14. In such a manner, the three microgrooves 14 can suppress the flow and pressure of the sealed fluid F locally directed in the radial direction from the tip region 13a, and can homogenize the pressure in the circumferential direction. For this reason, the stationary seal ring 10 can more effectively homogenize the fluid pressure.

In addition, two lands 12c of which the radial width dimension is very short can effectively guide the sealed fluid F between the lands 12c and the sliding surface 21 to any of the three microgrooves 14. In such a manner, the function of homogenizing the fluid pressure is easily realized by configuring a plurality of rows of the microgrooves 14 as one microgroove group.

In addition, the microgrooves 14 having a shorter radial width dimension than the dynamic pressure grooves 13 are less likely to hinder a dynamic pressure effect occurring in the dynamic pressure grooves 13. In addition, since the land 12 that is sufficiently wide can be provided by shortening the radial width dimension of the microgrooves 14 than that of the dynamic pressure grooves 13, it is possible to stabilize the interface B1 while preventing uneven contact between the sliding surfaces 11 and 21. Further, the three microgrooves 14 between which the lands 12c are disposed can disperse sliding locations even when the sliding surface 21 tilts slightly during sliding relative to the sliding surface 21. Incidentally, the interface B1 can be stabilized by one row of the microgrooves 14; however, when it is difficult to stabilize the interface B1 using only one row of the microgrooves 14, the effect of stabilizing the interface B1 can be achieved by providing a plurality of rows of the microgrooves 14.

In addition, when high pressure is generated in the tip region 13a, some of the sealed fluid F in the tip region 13a is homogenized by the microgrooves 14 on the downstream side thereof which communicate with the tip region 13a. Further, the sealed fluid F flows out from the tip region 13a to the microgrooves 14 on the downstream side, and the fluid is smoothly guided from the microgrooves 14 on an upstream side to the tip region 13a. For this reason as well, the microgrooves 14 communicating with the tip region 13a can more effectively homogenize the sealed fluid F in the tip region 13a where pressure fluctuations are severe. Particularly, when the microgrooves 14 are provided to cross a portion where the dynamic pressure reaches its peak, a greater effect is expected.

In addition, the microgrooves 14 concentrically disposed can guide the sealed fluid F along concentric circles. For this reason, between the sliding surfaces 11 and 21, the position of the interface B1 has no variation in radial position corresponding to the rotation speed, namely, the interface B1 occurs along the radial position corresponding to the rotation speed. Accordingly, the stationary seal ring 10 can further stabilize torque behavior.

Incidentally, a configuration in which the three microgrooves 14 are provided in the radial direction has been described; however, the present invention is not limited to this configuration, one or more microgrooves 14 may be provided in the radial direction, and in this case as well, the interface B1 can be stabilized.

### {Second embodiment}

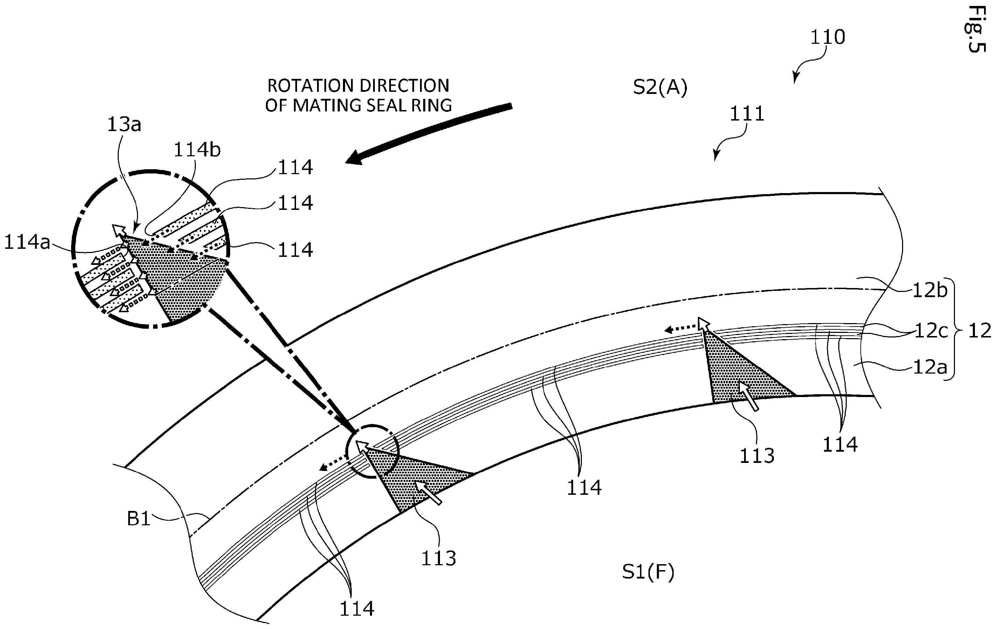

Next, sliding components according to a second embodiment of the present invention will be described with reference to FIG. 5. Incidentally, the description of configurations that are the same as and overlap with the configurations of the first embodiment will be omitted.

On a sliding surface 111 of a stationary seal ring 110 of the second embodiment, circumferential ends 114a and 114b of three microgrooves 114 are separated from a tip region 113a of each of dynamic pressure grooves 113 adjacent thereto in the circumferential direction. Namely, all the three microgrooves 114 have closed ends in the vicinity of the tip region 113a, and are not in communication with the tip region 113a.

Accordingly, the sealed fluid F that has flowed out from the tip region 113a into a gap between the sliding surfaces 111 and 21 as indicated by white arrows is guided while being dispersed into the three microgrooves 114 located on the downstream side in the relative rotation direction, as indicated by dashed arrows, and is homogenized.

In this case, it is preferable that the separation dimension between the downstream ends 114a of the microgrooves 114 in the relative rotation direction and the tip region 113a is short such that the fluid which has moved from the tip region 113a to the land 12a is more smoothly guided into the three microgrooves 114.

In addition, the fluid guided to the downstream side in the relative rotation direction by the three microgrooves 114 upstream of the dynamic pressure groove 113 due to the rotation of the rotating seal ring 20 is introduced into the tip region 113a of the dynamic pressure groove 113.

In this case, it is preferable that the separation dimension between the upstream ends 114b of the microgrooves 114 in the relative rotation direction and the tip region 113a is short such that the fluid which has moved from the upstream ends 114b of the three microgrooves 114 in the relative rotation direction to the land 12a is more smoothly introduced into the tip region 113a.

In addition, the microgrooves 114 formed to be sufficiently shallow prevent an increase in pressure from occurring when the sealed fluid F moves from the upstream ends 114b in the relative rotation direction to the land 12. Accordingly, pressure fluctuations are prevented from occurring in the microgrooves 114 on the sliding surface 111.

Incidentally, as described above, the dynamic pressure grooves and the microgrooves may be able to guide the fluid such that the fluid can be guided even when the dynamic pressure grooves 113 and the microgrooves 114 are discontinuous with each other.

### {Third embodiment}

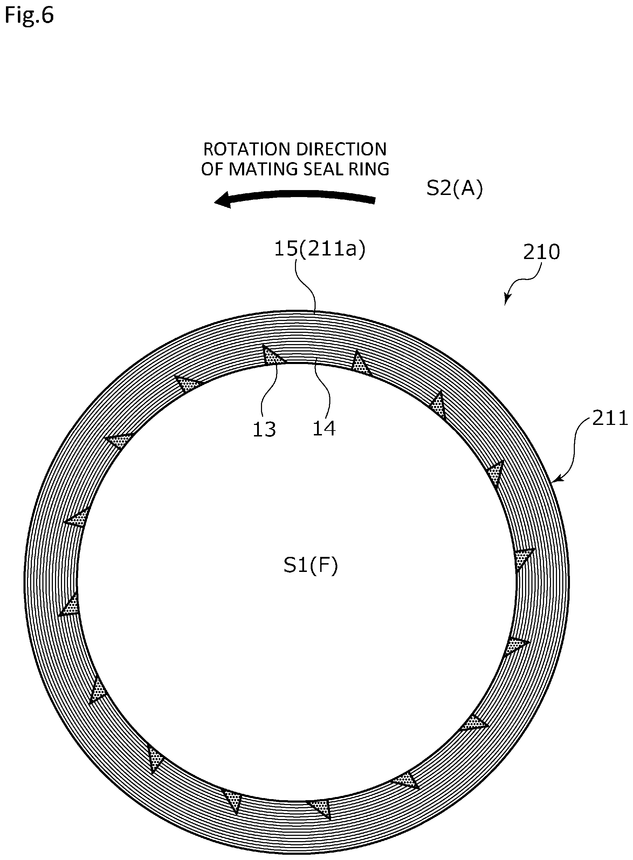

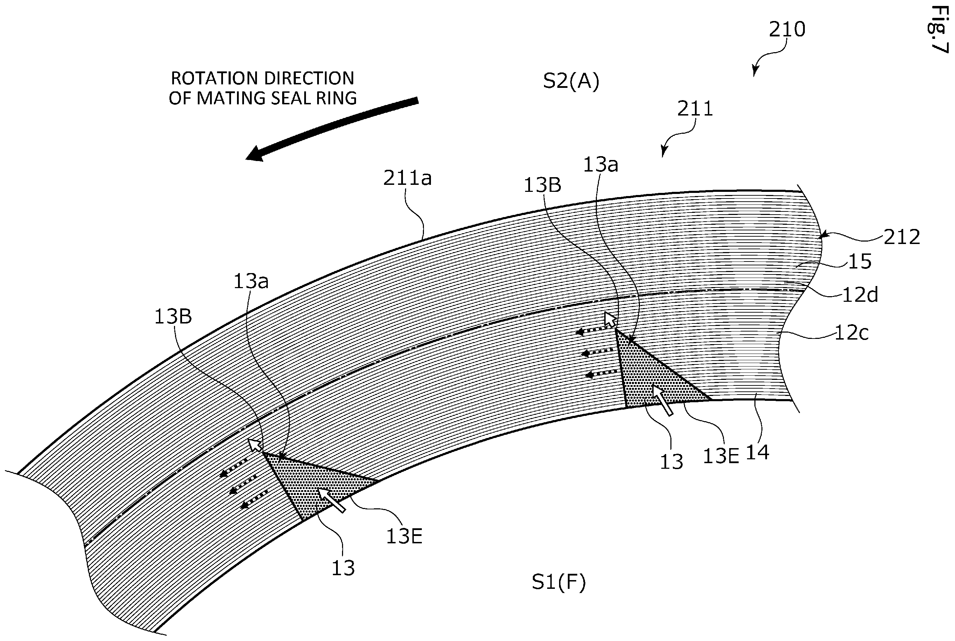

Next, sliding components according to a third embodiment of the present invention will be described with reference to FIGS. 6 and 7. Incidentally, the description of configurations that are the same as and overlap with the configurations of the first embodiment will be omitted.

On a sliding surface 211 of a stationary seal ring 210 of the third embodiment, in addition to a plurality of the dynamic pressure grooves 13 and a plurality of (12 rows in the present embodiment) microgrooves 14 provided between adjacent dynamic pressure grooves 13, a plurality of (20 rows in the radial direction in the present embodiment) microgrooves 15 extending continuously in the circumferential direction in an endless annular shape are disposed in a region 211a separated from the dynamic pressure grooves 13 in the radial direction.

The plurality of microgrooves 14 between the dynamic pressure grooves 13 are arc-shaped and linear grooves extending continuously along the circumferential direction, and are disposed substantially parallel to each other and in a row.

The plurality of microgrooves 15 are circular and linear grooves extending continuously along the circumferential direction, and are disposed substantially parallel to each other and in a row. The other configurations are substantially the same as those of the microgroove 14.

In addition, a land 212 of the sliding surface 211 includes the lands 12c between adjacent microgrooves 14 and lands 12d between adjacent microgrooves 15. Upper surfaces (namely, axial end surfaces) of the lands 12c and 12d are disposed on the same plane to form a flat surface of the land 212. In other words, the microgrooves 14 and 15 are formed in the radial direction on the sliding surface 211.

In more detail, the plurality of microgrooves 14 are provided on the sliding surface 211 in the radial direction from the opening end portions 13E of the dynamic pressure grooves 13 to the tips 13B. In addition, the plurality of microgrooves 15 are provided in the radial direction from the tips 13B of the dynamic pressure grooves 13 to a radially outer end 211a of the sliding surface 211.

Accordingly, the sealed fluid F that has flowed out from the tip region 13a of the dynamic pressure groove 13 into a gap between the sliding surfaces 211 and 21 as indicated by white arrows in FIG. 7 is homogenized not only by the plurality of microgrooves 14 located on the downstream side in the relative rotation direction as indicated by dashed arrows in FIG. 7, but also by the plurality of microgrooves 15. For this reason, the plurality of microgrooves 14 and 15 can more efficiently suppress the generation of unbalanced fluid pressure due to the dynamic pressure grooves 13.

In more detail, the sealed fluid F flowing out from the dynamic pressure grooves 13 and the inner space S1 into the gap between the sliding surfaces 211 and 21 needs to cross the microgrooves 14 when moving toward the outer space S2 side. During the crossing, some of the sealed fluid F is homogenized by the microgrooves 14. Accordingly, the amount and pressure of the sealed fluid F moving toward the outer space S2 side continue to be reduced each time the sealed fluid F crosses the microgroove 14.

In addition, the sealed fluid F that has flowed out from the dynamic pressure grooves 13 into the gap between the sliding surfaces 211 and 21 needs to cross the microgrooves 15 when moving toward the outer space S2 side. During the crossing, some of the sealed fluid F is guided by the microgrooves 15. Accordingly, the amount and pressure of the sealed fluid F moving toward the outer space S2 side continue to be reduced each time the sealed fluid F crosses the microgrooves 15. The same also applies to the atmosphere A that has flowed from the outer space S2 into the gap between the sliding surfaces 211 and 21.

Accordingly, the plurality of microgrooves 14 and 15 can suppress the flow and pressure of the sealed fluid F locally directed in the radial direction from the dynamic pressure grooves 13, and can homogenize the pressure in the circumferential direction. For this reason, the interface B1 between the sealed fluid F and the atmosphere A which is indicated by an alternate long and short dashed line in FIG. 7 is more easily stabilized between the sliding surfaces 211 and 21, so that the stationary seal ring 210 can further smooth torque behavior.

In addition, the sliding surface 211 on which the microgrooves 14 and 15 are formed in the radial direction easily retains the sealed fluid F or the atmosphere A between the sliding surfaces 211 and 21. Accordingly, the sliding surface 211 can reduce the starting torque when the rotating seal ring 20 starts rotating.

In addition, the lands 12c and 12d are also formed in the radial direction on the sliding surface 211 on which the microgrooves 14 and 15 are formed in the radial direction. Even when the sliding surface 21 tilts slightly during sliding relative to the sliding surface 21, sliding locations can be dispersed, so that the occurrence of uneven contact can be prevented.

Incidentally, in the present embodiment, a configuration in which the plurality of microgrooves 14 and 15 are formed in the radial direction on the sliding surface has been described; however, the present invention is not limited to this configuration, and the number of the microgrooves 14 and 15 may be changed as appropriate so long as the number is plural. For example, only the microgrooves 14 may be provided in the radial direction from the one radial end portions of the dynamic pressure grooves 13 to the other radial end portions, or one or more microgrooves 15 may be formed only in the vicinity of the radially outer side of the dynamic pressure grooves 13.

In addition, a configuration in which the plurality of microgrooves 14 are provided in the radial direction from the opening end portions 13E to the tips 13B has been described; however, the present invention is not limited to this configuration, and the microgrooves 14 may be formed from the tips 13B to a position separated toward an opening end portion 13E side, in other words, may cross the tips 13B. The same also applies to the opening end portion 13E side. Namely, in the present invention, the one radial end portion and the other radial end portion are not limited to including ends thereof.

Further, the plurality of microgrooves formed on the sliding surface and disposed to be separated from each other in the radial direction may be, for example, a combination of one microgroove 14 and one microgroove 15, or the types of the microgrooves may be different as long as a plurality of the microgrooves are provided. The same also applies to microgrooves 17 and 19 to be described later.

### {Fourth embodiment}

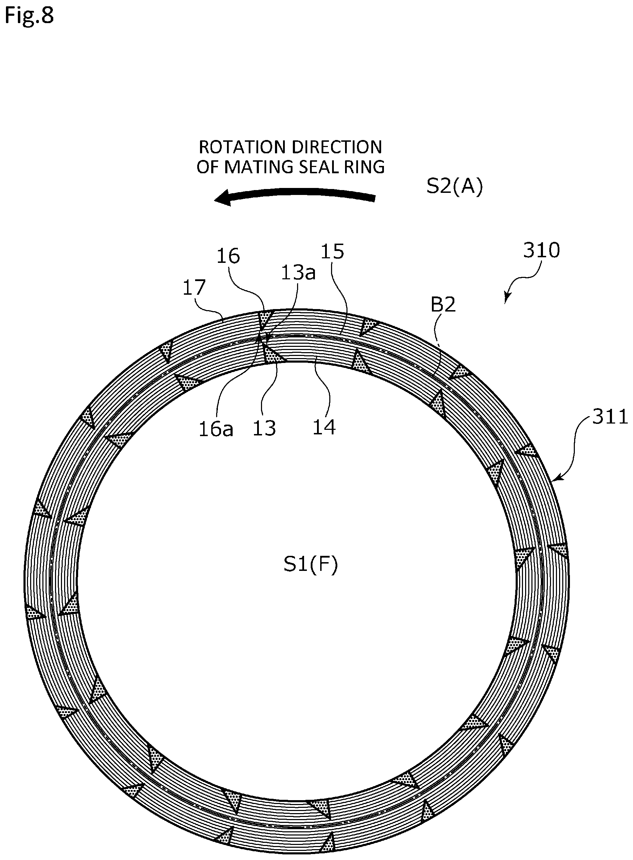

Next, sliding components according to a fourth embodiment of the present invention will be described with reference to FIG. 8. Incidentally, the description of configurations that are the same as and overlap with the configurations of the first embodiment will be omitted.

On a sliding surface 311 of a stationary seal ring 310 of the fourth embodiment, in addition to a plurality of the dynamic pressure grooves 13, a plurality of the microgrooves 14, and a plurality of the microgrooves 15, a plurality of dynamic pressure grooves 16 are evenly disposed in the circumferential direction on the radially outer side, and a plurality of microgrooves 17 are disposed to cross tip regions 16a of the dynamic pressure grooves 16.

Each of the dynamic pressure grooves 16 is formed in a triangular shape that is inclined in the rotation direction of the rotating seal ring 20 from an opening portion communicating with the outer space S2 toward the radially inner side. The dynamic pressure groove 16 is a positive pressure groove in which positive pressure is generated at a tip on the radially inner side and in the tip region 16a in the vicinity thereof when the rotating seal ring 20 rotates. In addition, the other configurations are substantially the same as those of the dynamic pressure groove 13.

Circumferential ends of the plurality of microgrooves 17 communicate with the dynamic pressure grooves 16 adjacent thereto in the circumferential direction. The other configurations are substantially the same as those of the microgroove 14.

The plurality of microgrooves 15 are provided between the dynamic pressure grooves 13 and 16 in the radial direction on the sliding surface 311.

Accordingly, as indicated by white arrows, in addition to the sealed fluid F flowing out from the tip regions 13a of the dynamic pressure grooves 13 into a gap between the sliding surfaces 311 and 21, the atmosphere A flows out from the tip regions 16a of the dynamic pressure grooves 16 into the gap between the sliding surfaces 311 and 21, so that lubricity can be more efficiently improved.

In addition, due to the atmosphere A flowing out from the tip regions 16a of the dynamic pressure grooves 16 into the gap between the sliding surfaces 311 and 21 under increased pressure, the stationary seal ring 310 can more efficiently prevent the sealed fluid F from leaking to the outer space S2.

In addition, as indicated by dashed arrows, in addition to the fact that the sealed fluid F that has flowed out from the tip regions 13a of the dynamic pressure grooves 13 into the gap between the sliding surfaces 311 and 21 is homogenized by the plurality of microgrooves 14 and 15, the atmosphere A that has flowed out from the tip regions 16a of the dynamic pressure grooves 16 into the gap between the sliding surfaces 311 and 21 is also homogenized by the plurality of microgrooves 15 and 17. For this reason, the generation of unbalanced fluid pressure due to the dynamic pressure grooves 13 and 16 can be suppressed.

In such a manner, even in a configuration in which pressure fluctuations are likely to occur not only on the radially inner side but also on the radially outer side, the stationary seal ring 310 easily stabilizes an interface B2 between the sealed fluid F and the atmosphere A which is indicated by an alternate long and short dashed line. For this reason, the stationary seal ring 310 can smooth torque behavior.

### {Fifth embodiment}

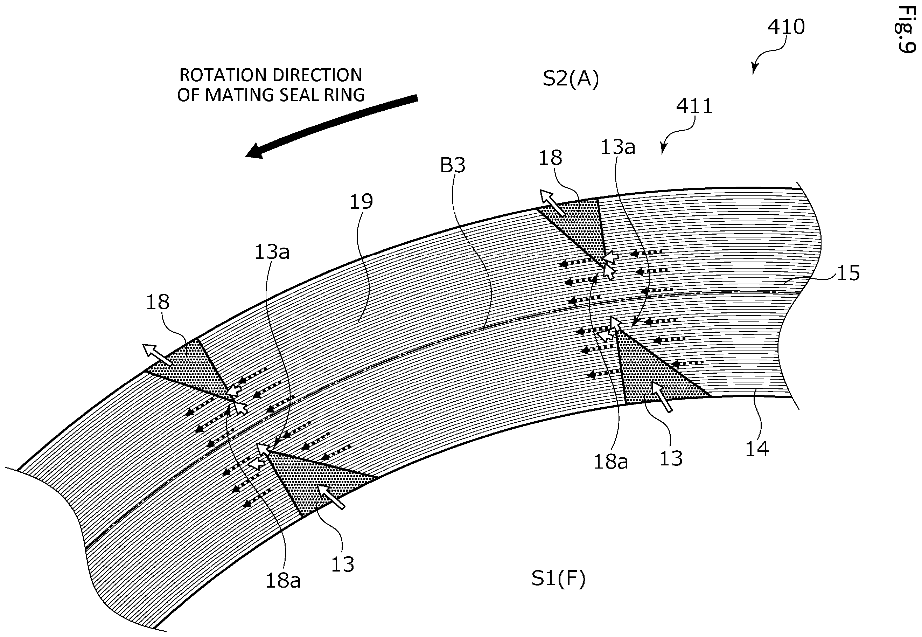

Next, sliding components according to a fifth embodiment of the present invention will be described with reference to FIG. 9. Incidentally, the description of configurations that are the same as and overlap with the configurations of the first embodiment will be omitted.

On a sliding surface 411 of a stationary seal ring 410 of the fifth embodiment, in addition to a plurality of the dynamic pressure grooves 13, a plurality of the microgrooves 14, and a plurality of the microgrooves 15, a plurality of dynamic pressure grooves 18 are evenly disposed in the circumferential direction on the radially outer side, and a plurality of microgrooves 19 are disposed to cross tip regions 18a of the dynamic pressure grooves 18.

Each of the dynamic pressure grooves 18 is formed in a triangular shape that is inclined in a counter-rotation direction of the rotating seal ring 20 from an opening portion communicating with the outer space S2 toward the radially inner side. The dynamic pressure groove 18 is a negative pressure groove in which negative pressure is generated at a tip on the radially inner side and in the tip region 18a in the vicinity thereof when the rotating seal ring 20 rotates. In addition, the other configurations are substantially the same as those of the dynamic pressure groove 13.

The plurality of microgrooves 19 communicate with the dynamic pressure grooves 18 adjacent thereto. The other configurations are substantially the same as those of the microgroove 17.

When the rotating seal ring 20 is rotated, as indicated by white arrows, the atmosphere A in the dynamic pressure grooves 18 follows and moves in the rotation direction of the rotating seal ring 20 due to shear with the sliding surface 21, and is returned to the outer space S2. Accordingly, negative pressure is generated in the tip regions 18a of the dynamic pressure grooves 18, and the atmosphere A flows into the tip regions 18a from a gap between sliding surfaces 411 and 21.

In addition, pressure fluctuations tend to more easily occur in the tip regions 18a of the dynamic pressure grooves 18 where negative pressure is generated than in the tip regions 13a of the dynamic pressure grooves 13 where positive pressure is generated. Even in the tip regions 18a, the microgrooves 19 can effectively homogenize the pressure in the tip regions 18a as indicated by dashed arrows. Accordingly, an interface B3 between the sealed fluid F and the atmosphere A which is indicated by an alternate long and short dashed line is easily stabilized, so that the stationary seal ring 410 can smooth torque behavior.

### {Sixth embodiment}

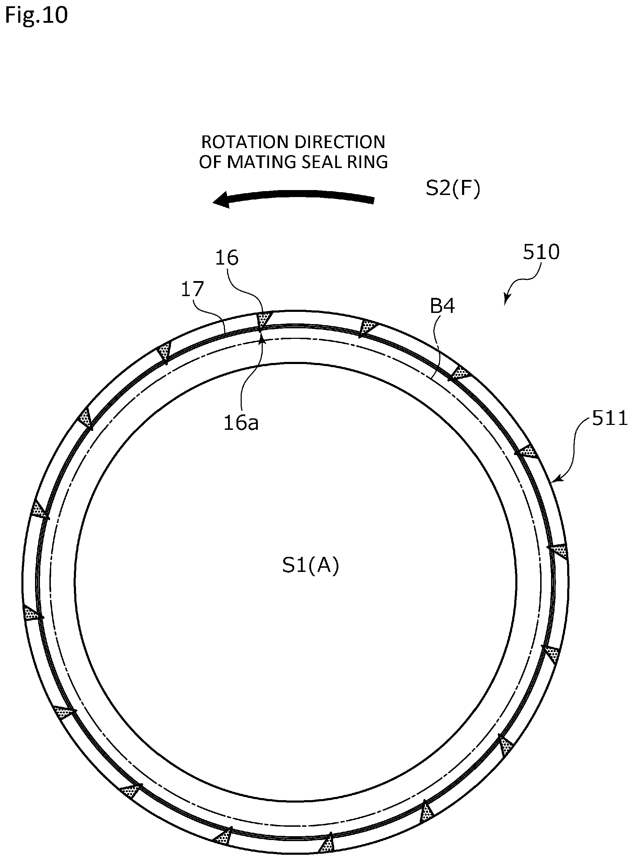

Next, sliding components according to a sixth embodiment of the present invention will be described with reference to FIG. 10. Incidentally, the description of configurations that are the same as and overlap with the configurations of the first embodiment will be omitted.

A mechanical seal to which a stationary seal ring 510 of the sixth embodiment is applied is an inside mechanical seal that seals the sealed fluid F attempting to leak from the radially outer side toward the radially inner side of sliding surfaces 511 and 21, and that allows the inner space S1 to communicate with the atmosphere A.

In addition, the sliding surface 511 is provided with a plurality of the dynamic pressure grooves 16 and a plurality of the microgrooves 17. The dynamic pressure grooves 16 and the microgrooves 17 have substantially the same structures as those of the fourth embodiment; however, similarly to the first embodiment, the plurality of microgrooves 17 communicate only with the tip regions 16a of the dynamic pressure grooves 16. Namely, the sliding surface 511 of the sixth embodiment is obtained by adapting the sliding surface 11 of the first embodiment to the inner side.

Even in such a configuration, as indicated by white arrows, lubricity between the sliding surfaces 511 and 21 can be improved by the sealed fluid F flowing out from the tip regions 16a of the dynamic pressure grooves 16 into a gap between the sliding surfaces 511 and 21.

In addition, as indicated by dashed arrows, the sealed fluid F that has flowed out from the tip regions 16a of the dynamic pressure grooves 16 into the gap between the sliding surfaces 511 and 21 is also homogenized by the plurality of microgrooves 17 between the sliding surfaces 511 and 21. For this reason, the generation of unbalanced fluid pressure due to the dynamic pressure grooves 16 can be suppressed. Accordingly, an interface B4 between the sealed fluid F and the atmosphere A which is indicated by an alternate long and short dashed line is easily stabilized, so that the stationary seal ring 510 can smooth torque behavior.

In such a manner, the mechanical seal to which the sliding components of the present invention are applied may be an inside mechanical seal. The same also applies to the second to fifth embodiments. Namely, in the second to fifth embodiments, the atmosphere A may exist in the inner space S1, and the sealed fluid F may exist in the outer space S2.

### {Seventh embodiment}

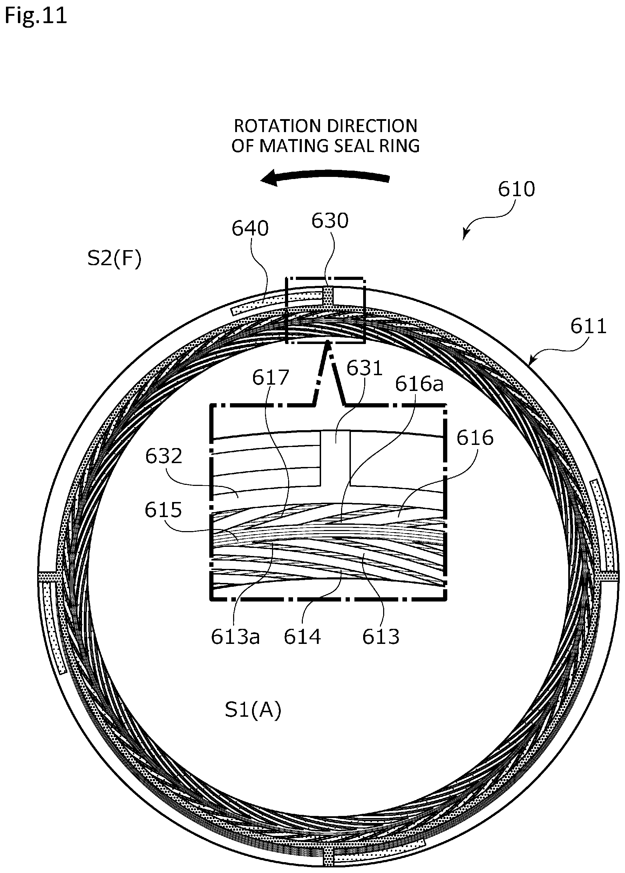

Next, sliding components according to a seventh embodiment of the present invention will be described with reference to FIG. 11. Incidentally, the description of configurations that are the same as and overlap with the configurations of the first embodiment will be omitted.

The mechanical seal to which a stationary seal ring 610 of the seventh embodiment is applied is an inside mechanical seal.

On a sliding surface 611 of the stationary seal ring 610, in addition to a plurality of dynamic pressure grooves 613, a plurality of microgrooves 614, a plurality of microgrooves 615, a plurality of dynamic pressure grooves 616, and a plurality of microgrooves 617, a deep groove 630 and a plurality of shallow grooves 640 that are evenly disposed in the circumferential direction are formed. Incidentally, the microgrooves 614, the microgrooves 615, and the plurality of microgrooves 617 have the same groove width and pitch. In addition, in a speech balloon of FIG. 11, dots are omitted to make the microgrooves easier to see.

The deep groove 630 includes a plurality of communication groove portions 631 extending in the radial direction from openings communicating with the outer space S2 toward the radially inner side, and a circumferential groove portion 632 having an endless annular shape and communicating with the plurality of communication groove portions 631.

According to this configuration, the stationary seal ring 610 can introduce the sealed fluid F from the outer space S2 toward the circumferential groove portion 632. For this reason, the stationary seal ring 610 can ensure the amount of the sealed fluid F to be supplied into a gap between the sliding surfaces 611 and 21 in a wide circumferential range of the circumferential groove portion 632. Accordingly, the stationary seal ring 610 can suppress the occurrence of poor lubrication.

Each of the shallow grooves 640 extends in the circumferential direction from an opening communicating with the communication groove portion 631 of the deep groove 630 toward the rotation direction of the rotating seal ring 20. The shallow groove 640 is a positive pressure groove in which positive pressure is generated at a downstream end in the relative rotation direction and in the vicinity thereof when the rotating seal ring 20 rotates.

Each of the dynamic pressure grooves 613 is formed in a spiral shape that is inclined in the rotation direction of the rotating seal ring 20 from an opening communicating with the inner space S1 toward the radially outer side. Each of the dynamic pressure grooves 616 is formed in a spiral shape that is inclined in the rotation direction of the rotating seal ring 20 from an opening communicating with the circumferential groove portion 632 of the deep groove 630 toward the radially inner side. The dynamic pressure grooves 613 and 616 are positive pressure grooves in which positive pressure is generated at tips on the radially inner side and in tip regions 613a and 616a in the vicinities thereof when the rotating seal ring 20 rotates.

The microgrooves 614 communicate with the dynamic pressure grooves 613 adjacent thereto. The microgroove 615 has an endless annular shape disposed between the dynamic pressure grooves 613 and 616 in the radial direction of the sliding surface 611. The microgrooves 617 communicate with the dynamic pressure grooves 616 adjacent thereto. The other configurations are substantially the same as those of the microgroove 14.

As indicated by white arrows, when the rotating seal ring 20 rotates, the stationary seal ring 610 allows the atmosphere A in the inner space S1 to flow into the gap between the sliding surfaces 611 and 21 through the dynamic pressure grooves 613, and allows the sealed fluid F in the circumferential groove portion 632 of the deep groove 630 to flow into the gap between the sliding surfaces 611 and 21 through the dynamic pressure grooves 616.

Accordingly, the stationary seal ring 610 can introduce the sealed fluid F in the outer space S2 to the radially inner side through the shallow grooves 640 when the rotating seal ring 20 rotates. For this reason, the stationary seal ring 610 allows a large amount of the sealed fluid F to flow into the gap between the sliding surfaces 611 and 21, so that slidability can be improved.

In addition, as indicated by dashed arrows, between the sliding surfaces 611 and 21, the atmosphere A that has flowed out from the tip regions 613a of the dynamic pressure grooves 613 into the gap between the sliding surfaces 611 and 21 is homogenized by the plurality of microgrooves 614 and the plurality of microgrooves 615, and the sealed fluid F that has flowed out from the tip regions 616a of the dynamic pressure grooves 616 into the gap between the sliding surfaces 611 and 21 is also homogenized by the plurality of microgrooves 615 and the plurality of microgrooves 617.

For this reason, the stationary seal ring 610 can suppress the generation of unbalanced fluid pressure due to the dynamic pressure grooves 613 and 616. Accordingly, an interface between the sealed fluid F and the atmosphere A is easily stabilized, so that the stationary seal ring 610 can smooth torque behavior.

Incidentally, the stationary seal ring 610 of the seventh embodiment may be applied to an outside mechanical seal.

### {Eighth embodiment}

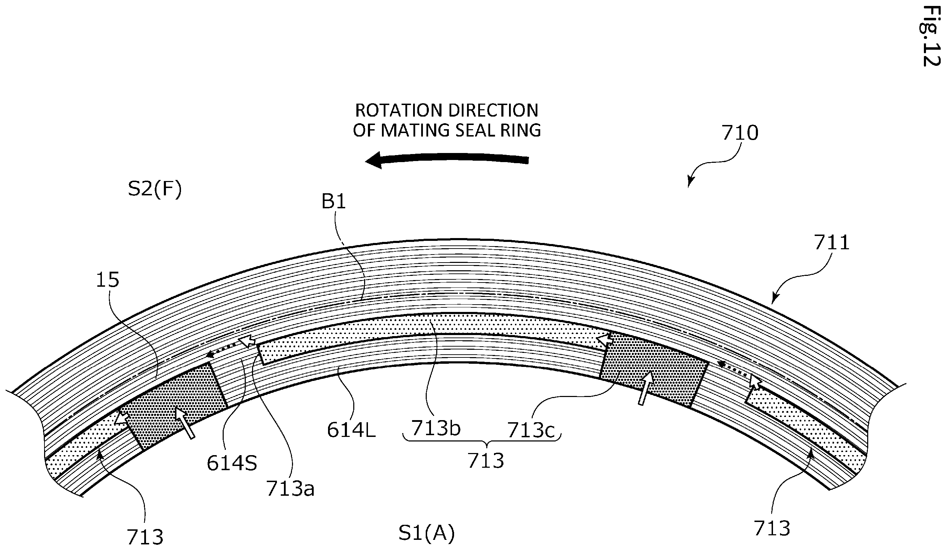

Next, sliding components according to an eighth embodiment of the present invention will be described with reference to FIG. 12. Incidentally, the description of configurations that are the same as and overlap with the configurations of the third embodiment will be omitted.

The mechanical seal to which a stationary seal ring 710 of the eighth embodiment is applied is an outside mechanical seal.

A plurality of dynamic pressure grooves 713, a plurality of microgrooves 714S and 714L, and a plurality of the microgrooves 15 are disposed on a sliding surface 711 of the stationary seal ring 710.

Each of the dynamic pressure grooves 713 is a so-called Rayleigh step including a shallow groove 713b having a rectangular shape and extending continuously along the circumferential direction, and a deep groove 713c having a rectangular shape and extending continuously along the radial direction.

Each of the microgrooves 714S communicates with the deep groove 713c located on the downstream side in the relative rotation direction, and the shallow groove 713b located on the upstream side in the same direction. Each of the microgrooves 714L communicates with the deep groove 713c located on the downstream side in the relative rotation direction, and the deep groove 713c located on the upstream side in the same direction. The other configurations are substantially the same as those of the microgroove 14.

In the stationary seal ring 710, each of the dynamic pressure grooves 713 is a positive pressure groove in which the sealed fluid F in the shallow groove 713b of the dynamic pressure groove 713 follows and moves in the rotation direction of the rotating seal ring 20 due to shear with the sliding surface 21 as indicated by white arrows, when the rotating seal ring 20 rotates, to generate positive pressure at a tip located on the downstream side in the relative rotational direction and in a tip region 713a in the vicinity thereof.

In addition, as indicated by white arrows, the sealed fluid F is supplied to the shallow grooves 713b of the dynamic pressure grooves 713 from the deep grooves 713c of the dynamic pressure grooves 713. Accordingly, the stationary seal ring 710 can suppress the occurrence of poor lubrication, and allows the sealed fluid F to stably flow into a gap between the sliding surfaces 711 and 21 from the shallow grooves 713b of the dynamic pressure grooves 713.

In addition, as indicated by dashed arrows, the sealed fluid F that has flowed out from the tip regions 713a of the dynamic pressure grooves 713 into the gap between the sliding surfaces 711 and 21 is homogenized by the plurality of microgrooves 714S, 714L, and 15 between the sliding surfaces 711 and 21. For this reason, the generation of unbalanced fluid pressure due to the dynamic pressure grooves 713 can be suppressed. Accordingly, the interface B1 between the sealed fluid F and the atmosphere A which is indicated by an alternate long and short dashed line is easily stabilized, so that the stationary seal ring 710 can smooth torque behavior.

Incidentally, the stationary seal ring 710 of the eighth embodiment may be applied to an outside mechanical seal.

The embodiments of the present invention have been described above with reference to the drawings; however, the specific configurations are not limited to the embodiments, and changes or additions that are made without departing from the scope of the present invention are included in the present invention.

For example, in the first to eighth embodiments, the mechanical seal for an automobile has been described as an example of the sliding components; however, the present invention may be applied to other mechanical seals for general industrial machines and the like. In addition, the present invention is not limited to the mechanical seal, and may be applied to sliding components other than the mechanical seal, such as a slide bearing.

In addition, in the first to eighth embodiments, the sealed fluid has been described as a high-pressure liquid, but is not limited thereto, and may be a gas or a low-pressure liquid or may be a mist mixture of liquid and gas.

In addition, in the first to eighth embodiments, the fluid on the leakage space side has been described as the atmosphere that is a low-pressure gas, but is not limited thereto, and may be a liquid or a high-pressure gas or may be a mist mixture of liquid and gas.

In addition, in the first to eighth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

In addition, in the first to eighth embodiments, an example in which the dynamic pressure grooves and the microgrooves are provided in the stationary seal ring has been described; however, the dynamic pressure grooves and the microgrooves may be provided in the rotating seal ring. Further, the dynamic pressure grooves and the microgrooves may be provided in different respective seal rings.

In addition, in the first to eighth embodiments, the microgrooves have been described as having a curved shape or an endless annular shape extending concentrically, but are not limited thereto, and may be inclined with respect to concentric circles, may have a straight shape, may have a spiral shape, may be a dashed line shape, or may have a wave shape, and the shape of the microgrooves may be changed as appropriate. Further, one microgroove may have a vortex shape that circles continuously along the circumferential direction of the sliding surface, and a plurality of microgrooves may be disposed in the radial direction.

In addition, in the first to eighth embodiments, a triangular shape, a spiral shape, and a Rayleigh step have been described as examples of modes of the dynamic pressure groove; however, the modes of the dynamic pressure groove are not limited thereto, and may be changed as appropriate.

In addition, in the first to eighth embodiments, a configuration in which the depth dimension of the dynamic pressure groove is approximately 5 to 50 times deeper than the depth dimension of the microgroove has been described; the present invention is not limited to this configuration, and each depth dimension may be changed as appropriate, and it is preferable that the depth dimension of the dynamic pressure groove is larger than the depth dimension of the microgroove.

### {REFERENCE SIGNS LIST}

10 Stationary seal ring
11 Sliding surface
13 Dynamic pressure groove
13a Tip region
13B Tip (radially outer end portion)
13E Opening end portion (radially inner end portion)
14 Microgroove
18 Dynamic pressure groove (negative pressure groove)
20 Rotating seal ring (sliding component)
21 Sliding surface
110 Stationary seal ring
111 Sliding surface
113 Dynamic pressure groove
114 Microgroove
210, 310, 410, 510 Stationary seal ring
211, 311, 411, 511 Sliding surface
15 Microgroove
16 Dynamic pressure groove
16a Tip region
17 Microgroove
18 Dynamic pressure groove
18a Tip region
19 Microgroove
610 Stationary seal ring
611 Sliding surface
613, 616 Dynamic pressure groove
613a, 616a Tip region
614, 615, 617 Microgroove
710 Stationary seal ring
711 Sliding surface
713 Dynamic pressure groove
713a Tip region
714L, 714S Microgroove
A Atmosphere (fluid on leakage space side)
B1 to B5 Interfaces
D1, D2 Depth dimension
F Sealed fluid
P Pitch
S1 Inner space (sealed fluid space)
S2 Outer space (leakage space)
W1 Radial width dimension of dynamic pressure groove
W2 Radial width dimension of microgroove

## Claims

1. Sliding components of which a pair of sliding surfaces rotate relative to each other, a dynamic pressure groove being formed on at least one of the sliding surfaces, and which partition a sealed fluid space and a leakage space off from each other,
wherein a microgroove shallower than the dynamic pressure groove and extending in a circumferential direction is disposed on at least one of the sliding surfaces, and
the microgroove extends to cross a tip region on a tip side of half a radial width dimension of the dynamic pressure groove.

2. The sliding components according to claim 1,
wherein a plurality of the microgrooves are disposed to be separated from each other in a radial direction.

3. The sliding components according to claim 1,
wherein a radial width dimension of the microgroove is shorter than the radial width dimension of the dynamic pressure groove.

4. The sliding components according to any one of claims 1 to 3,
wherein the microgroove communicates with the dynamic pressure groove.

5. The sliding components according to claim 2,
wherein the plurality of microgrooves are concentric arc-shaped grooves.

6. The sliding components according to claim 2,
wherein other microgrooves are further provided in a region separated from the dynamic pressure groove in the radial direction.

7. The sliding components according to claim 2,
wherein the plurality of microgrooves are provided in the radial direction from a first radially end portion to a second radially end portion of the dynamic pressure groove.

8. The sliding components according to claim 1,
wherein the dynamic pressure groove includes a negative pressure groove that generates a negative pressure and a positive pressure groove that generate a positive pressure.
